# EUROPÄISCHE PATENTSCHRIFT

(11) **EP 3 311 971 B1**
(45) Veröffentlichungstag und Bekanntmachung des Hinweises auf die Patenterteilung: **21.08.2019**
(21) Anmeldenummer: 17195092.6
(22) Anmeldetag: 06.10.2017
(51) Int. Cl.: B29C 33/38, B29C 45/37

(54) **VERFAHREN ZUM ERZEUGEN EINER OBERFLÄCHENSTRUKTUR AUF EINEM KUNSTSTOFFBAUTEIL**
PROCESS FOR PRODUCING A PLASTIC PART WITH A SURFACE STRUCTURE
PROCÉDÉ POUR LA PROCUTION DU PART AVEC DES STRUCTURES SUPERFICIELLES

(30) Priorität: 18.10.2016 DE 102016119760
(43) Veröffentlichungstag der Anmeldung: 25.04.2018
(73) Patentinhaber: Gerresheimer Regensburg GmbH, 93047 Regensburg (DE)
(72) Erfinder: Schmitt, Bernhard, 92442 Wackersdorf (DE); Will, Dominik, 95686 Fichtelberg (DE); Schwab, Daniel, 92224 Amberg (DE)
(74) Vertreter: Reichert & Lindner Partnerschaft Patentanwälte

(56) Entgegenhaltungen:
- DE-A1- 10 130 392
- DE-A1-102009 019 762

## Beschreibung

Die Erfindung betrifft ein Verfahren zum Erzeugen der Oberflächenstruktur auf zumindest einem Teil der Oberfläche eines Kunststoffbauteils.

Zur Erzeugung von Kunststoffbauteilen mit definierten Oberflächenstrukturen existieren zur Zeit im Wesentlichen zwei Lösungen, die zur Mikrostrukturierung eines Einsatzes für ein Werkzeug zur Herstellung von Abformungen eines Kunststoffbauteils mit dem Spritzgussverfahren Anwendung finden. Eine Möglichkeit zur Herstellung von Mikrostrukturen in einem Einsatz ist das Ultrapräzisionsfräsen. Das Ultrapräzisionsfräsen ist analog zu normalen Fräsprozessen. Jedoch werden für das Ultrapräzisionsfräsen sehr hohe Drehzahlen und sehr filigrane Fräser verwendet. Dadurch besteht das Risiko des Bruchs eines Fräsers. Der Aufwand der Schwingungsdämpfung ist beträchtlich. Normale und sehr gute kommerzielle Maschinen können dieses Gebiet nicht abdecken. Investitionen in diese Technologien würden im Millionenbereich liegen.

Eine weitere Möglichkeit zur Mikrostrukturierung bei einem Einsatz für ein Spritzgusswerkzeug ist das Liga-Verfahren. Hier wird ein lithographischer Schritt von einer galvanischen Abformung gefolgt. Die dadurch erstellten Einsätze für Spritzgusswerkzeuge sind zwar sehr genau und auch für die Massenproduktion (zum Beispiel von CDs) geeignet, jedoch ist die Dauerfestigkeit dieser Einsätze begrenzt auf ca. 100.000 Schuss. Sehr große Mengen im Bereich von einigen hundert Millionen Stück lassen sich nicht ohne erheblichen Aufwand herstellen.

Die deutsche Patentanmeldung DE 10 2009 019 762 offenbart ein Verfahren zum Herstellen von Gegenständen mit einer definiert strukturierten Oberfläche. Auf einem Träger wird eine flüssige Kunststoffschicht aufgetragen, die durch Energieeintrag aushärtbar ist. Durch einen definierten Energieeintrag an vordefinierten Stellen der flüssigen Kunststoffschicht kann somit eine zu erzielende Strukturhöhe vorgegeben und eingestellt werden.

Die deutsche Patentanmeldung DE 10 2010 017 357 A1 offenbart ein Verfahren zur Herstellung von Körpern mit mikro- und/oder nanostrukturierten Oberflächen. Es ist ein aus Diamant, Hartmetall, Glas oder Keramik bestehendes Ende eines Prägewerkzeugs vorgesehen. Das Prägewerkzeug wird dabei auf verschiedene Stellen der Oberfläche des Körpers gepresst. An den Aufpressstellen werden Vertiefungen eingeprägt und/oder Durchbrüche erzeugt. Das Prägewerkzeug kann mit beliebig geformten Enden eingesetzt und beliebig geformte Körper mit Vertiefungen können versehen werden.

Die internationale Patentanmeldung WO 03/044383 A1 offenbart ein Lager, eine Verwendung einer zumindest bereichsweisen nanoskopisch rauen Lagerfläche und ein Verfahren zur Herstellung eines Lagers mit einer nanoskopisch rauen Lagerfläche. Eine Verbesserung der Lagereigenschaften - Minimierung der Partikelbildung und Verringerung der Reibung - wird dadurch erreicht, dass die Lagerfläche zumindest bereichsweise nanoskopisch rau ausgebildet wird. Dies erfolgt insbesondere durch Anätzen der Lagerfläche. Unter "mikro-rau" ist hier eine derart raue - vorzugsweise bis in den µm Bereich reichende - Ausbildung der Oberfläche zu verstehen, dass Partikel, vorzugsweise von bis zu 1 µm oder sogar bis zu 10 µm, von Vertiefungen der Oberfläche zumindest teilweise aufgenommen und insbesondere darin eingelagert werden können. Die Vertiefungen bzw. Erhebungen sind vorzugsweise unregelmäßig über die Lagerfläche zumindest im mikro-rauen Bereich verteilt angeordnet, wobei die benachbarten Vertiefungen durch vorzugsweise ebenfalls unregelmäßig geformte Erhebungen voneinander getrennt sind.

Die europäische Patentanmeldung EP 1 063 071 A2 befasst sich mit einem Fahrzeugreifen mit Seitenwänden, deren Oberfläche zumindest zum Teil mit einer Mikrostruktur versehen ist. Die Mikrostruktur setzt sich dabei aus Mikroerhebungen, die eine Höhe von 10 bis 20 µm aufweisen und in einem gegenseitigen Abstand von bis zu 25 µm angeordnet sind, zusammen. Das Material, in dem die Mikrostrukturen eingebracht sind, ist ein Elastomer. Die am Reifen ausgebildeten Mikrostrukturen sind nicht zum Zusammenwirken mit einem Reibpartner geeignet.

Das deutsche Patent DE 195 18 270 C1 offenbart einen rutschfesten Fußbodenbelag, insbesondere aus mineralischen Werkstoffen, wie zum Beispiel Stein oder Granit, mit hochglanzpolierter Oberfläche sowie ein Verfahren zur Herstellung solcher rutschfesten Fußbodenbeläge. Die Oberfläche des Fußbodenbelages ist dadurch rutschfest, dass auf ihr linsenförmige, scharfkantige, möglichst flache Vertiefungen (Mikrokrater mit Saugnapfwirkung), die für das menschliche Auge unsichtbar sind, statistisch verteilt aber unregelmäßig angeordnet sind. Erhalten werden diese Mikrokrater mit Saugnapfwirkung durch eine gezielte und definierte Einwirkung von Laserimpulsen. Die Lehre dieses Dokuments führt von der gegenwärtigen Erfindung weg, da bei der hier offenbarten Lehre die Haftreibung erhöht wird. Hierdurch wird durch die Mikrostrukturen am thermoplastischen Kunststoffbauteil die Reibung (Haftreibung) mit einem Reibpartner reduziert.

DE 101 30 392 A1 offenbart Vorrichtungen und Geräte, insbesondere (Schnee)Gleitelemente, wobei alle oder einige Oberflächen mit künstlich aufgebrachten Oberflächenstrukturierungen im Mikro- bzw. Nanobereich versehen sind. Eine Ausbildungsform dieser Strukturierungen besteht aus Erhebungen in Form von Riefen/Rillen und Vertiefungen, die eine Oberflächenstruktur aufweisen, mit überwiegend parallel ausgerichteten Erhebungen mit dazwischenliegenden, ebenfalls überwiegend parallel angeordneten Vertiefungen, deren Materialien hauptsächlich aus wasserabstoßenden Materialien beziehungsweise wasserabstoßend beschichteten oder behandelten Materialien bestehen, die in Längsrichtung zur überwiegenden Bewegungsrichtung der Oberflächen des Gleitelements aufgebracht sind. Zudem ist eine andere Ausbildungsform der Strukturierungen vorgesehen, die hauptsächlich aus richtungsunabhängigen, die Selbstreinigung (vor allem mit Hilfe von Wasser) unterstützenden künstlich aufgebrachte, hydrophoben bis ultraphoben Oberflächenstrukturen besteht, deren Erhebungen (Noppenstruktur), aufgebracht auf eine Oberfläche aus Materialien, mit ebenfalls hydrophoben Eigenschaften, sowie hydrophob beschichtet oder behandelt, ebenfalls hauptsächlich aus wasserabstoßenden Materialien bestehen, sowie wasserabstoßend beschichteten oder behandelten Materialien, permanent aufgebracht auf einer oder mehreren oder allen Oberflächen des Gleitelements.

DE 10 2009 019 762 A1 offenbart ein Verfahren zum Herstellen von Gegenständen mit einer strukturierten, vorzugsweise optisch wirksamen Oberfläche, welche an unterschiedlichen Positionen unterschiedlich vorgegebene Strukturhöhen aufweist. Eine noch flüssige Kunststoffschicht aus einem bei Energieeintrag aushärtenden Kunststoff wird auf einen Träger aufgetragen. Es erfolgt ein Energieeintrag in den Kunststoff, wobei die Menge der je Zeiteinheit einzutragenden Energie örtlich und/oder zeitlich differenziert in Abhängigkeit von der jeweils zu erzielenden Strukturhöhe vorgegeben wird, so dass im Ergebnis des Energieeintrags an unterschiedlichen Positionen der Oberfläche unterschiedliche Mengen an noch nicht ausgehärtetem und bereits ausgehärtetem Kunststoff vorhanden sind, und der nicht ausgehärtete Kunststoff entfernt wird.

Bisher existieren mehrere Lösungen, die zu einer Kontrolle beziehungsweise definierten Einstellung der Reibung zwischen zwei Reibpartnern führen können. Die Reduzierung der Reibung zwischen zwei Reibpartnern kann zum einen durch eine geeignete Materialauswahl oder durch den Zusatz von reibungsreduzierenden Stoffen erreicht werden. Ebenso kann zur Erhöhung der Reibung zwischen zwei Reibpartnern eine definierte Mikrostrukturierung vorgenommen werden.

Durch geeignete Materialpaarungen der beiden Reibpartner, wie zum Beispiel Polyoxymethylen (POM) oder Polybutylenterephthalat (PBT), sowie die gezielte Vermeidung ungünstiger Konstellationen, wie zum Beispiel der Paarung gleicher Werkstoffe, kann die Reibung insgesamt abgesenkt werden. Nachteil ist, dass die Anfangsreibung bis zur Ausbildung eines Schmierfilms zwischen den beiden Reibpartnern aus dem abgeriebenen Material erhöht ist.

Gleitadditive, die dem Grundmaterial des Kunststoffbauteils zugesetzt werden, können die Reibung herabsetzen. Polytetrafluorethylen (PTFE) ist das Material mit der geringsten Oberflächenenergie und kann in das Grundmaterial des Kunststoffbauteils eingemischt werden. Die Absenkung der Reibung ist signifikant, jedoch muss das PTFE in Form von Abrieb aus dem Grundmaterial herausgelöst werden. Auch PTFEgeschmierte Typen zeigen hohe Reibung zu Beginn des Gebrauchs, die dann, nach einigen Lastzyklen, stark absinkt. Ist eine, über alle Lastzyklen gleichförmig definierte Reibung erforderlich, kann PTFE die Situation verkomplizieren. Weiter führt das Einmischen von PTFE in das Grundmaterial des Kunststoffbauteils zu einer Verteuerung und kann auch bei hohem Anteil (wie zum Beispiel von 20 %) eine Veränderung der mechanischen Eigenschaften nach sich ziehen. Eine Strahlensterilisation von PTFE-haltigen Kunststoffbauteilen muss auf Biokompatibilität geprüft werden, da das Risiko der Freisetzung kurzer, fluorierter Molekülfragmente besteht.

Eine weitere Möglichkeit zur Herabsetzung der Anfangsreibung besteht durch den Zusatz von Silikon. Silikon kann als Additiv insbesondere dann eingesetzt werden, wenn eine niedrige Anfangsreibung erforderlich ist. Silikon kann zur Oberfläche des Werkstoffs beziehungsweise Kunststoffbauteils migrieren und dort eine Anfangsschmierung bilden. Meist wird Silikon in Verbindung mit PTFE eingesetzt, um eine gleichförmigere Absenkung der Reibung zu erzielen. Nachteilig ist die Erschwernis einer medizinischen Zulassung des Additivs, sowie mögliche Einflüsse auf andere Prozessschritte, wie zum Beispiel Bedruckung, Klebung, etc., bei denen eine Oberflächenhaftung notwendig ist.

Zusätzlich können zur Herabsetzung der Reibung Napf-Strukturen in der Oberfläche eines Kunststoffbauteils eingebracht werden, wobei die Napf-Strukturen als Schmierstoffreservoir dienen können. Auch hier besteht der Nachteil, dass ein weiterer Zusatzstoff bei dem Kunststoffbauteil verwendet wird, so dass die Verträglichkeit mit einem Medikament, das zum Beispiel mit den entsprechend modifizierten Oberflächen von Kunststoffbauteilen in Kontakt geraten kann, geprüft werden muss. Medikamente können zum Beispiel mit Flüssigsilikonen unerwünschte Nebenwirkungen zeigen.

Eine Aufgabe der Erfindung ist, ein Verfahren zu schaffen, bei dem in zumindest einem Teil der Oberfläche eines Kunststoffbauteils eine Oberflächenstruktur ausgebildet wird, die zumindest eine anfängliche Haftreibung zwischen dem Kunststoffbauteil und einem Reibpartner reduziert.

Diese Aufgabe wird durch ein Verfahren zum Erzeugen einer Oberflächenstruktur in zumindest einem Teil einer Oberfläche eines Kunststoffbauteils gelöst, das die Merkmale des Anspruchs 1 umfasst.

Durch den Einsatz ultrakurz gepulster Laser kann ein sogenannter kalter Materialabtrag erfolgen. Liegt der Puls im Bereich von <= 20 Pikosekunden bei gleichzeitig hoher Lichtintensität, so entsteht ein Abtrag von Material ohne Schmelzbildung. Die physikalische Grenze von ultrakurzen Pulsen (UKP) resultiert aus der thermischen Diffusionstiefe und der optischen Eindringtiefe delta (für UKP: d<delta). Folglich ist der Begriff UKP als materialspezifisch zu betrachten. Bei Metallen circa 1ps. Damit sind Strukturierungen bis zu einer Auflösungsgrenze des Laserfokus - in der Praxis 10 bis 20 µm - möglich. Damit können Werkzeugstähle für Einsätze, die in einem Spritzgussprozess verwendet werden, in kontrollierter Art und Weise strukturiert werden. Dies erlaubt, wie bereits in Versuchen gezeigt werden konnte, bei geeigneter geometrischer Gestaltung die Abformung am Kunststoffbauteil. Ebenso wäre natürlich auch eine Direktstrukturierung von zumindest einem Teil der Oberfläche des Kunststoffteils denkbar. Dies ist jedoch wesentlich kostenintensiver, da jedes Kunststoffbauteil einzeln strukturiert werden müsste.

Gemäß einer nicht erfindungsgemäßen Ausführungsform ist ein thermoplastisches Kunststoffbauteil mit einer Oberflächenstruktur ausgebildet, um eine Reibungsreduzierung (zumindest Anfangsreibung, wie zum Beispiel Haftreibung) des Kunststoffbauteils mit einem weiteren Reibpartner zu erreichen. Zumindest ein Teil der Oberfläche des Kunststoffbauteils trägt nach dem Spritzgussprozess eine Vielzahl von in jeweils einer geraden Linie angeordneten Strukturtypen. Zwischen zwei benachbarten, geraden Linien der Strukturtypen ist ein Abstand vorgesehen, der im Bereich von 10 µm bis 1 mm liegt. Eine Breite der in der geraden Linie angeordneten Strukturtypen liegt dabei im Bereich von 10 µm bis 1 mm, insbesondere im Bereich von 10 µm bis 100 µm. Eine Höhe und/oder Tiefe der in der geraden Linie angeordneten Strukturtypen liegt im Bereich von 1 µm bis 100 µm.

Diese Strukturierung von zumindest einem Teil der Oberfläche eines thermoplastischen Kunststoffbauteils resultiert in vorteilhafter Weise in einer veränderten, insgesamt niedrigen Reibung gegenüber unstrukturierten Referenzflächen auf dem Kunststoffbauteil. Diese strukturierten Oberflächen haben eine sehr niedrige Anfangsreibung (Haftreibung), was sich damit erklärt, dass die Strukturierung den Effekt hat, dass dadurch die Kontaktfläche verringert ist. Durch die Verringerung der Kontaktfläche bei dem Kunststoffbauteil reduziert man somit die adhäsive Reibung zu Beginn der Belastung, welche die Reibung zunächst sehr niedrig ausfallen lässt. Die Reibung ist somit niedriger als bei einem vergleichbaren Kunststoffbauteil, das mit einem geschliffenen Werkzeug hergestellt wurde. Nach einigen Zyklen verreibt die strukturierte Schicht und bildet einen Schmierfilm auf der Oberfläche des Kunststoffbauteils aus, der etwa die Reibung eines mit dem polierten Werkzeug hergestellten Kunststoffbauteils im eingefahrenen Zustand zeigt. Die Erfindung bietet dabei gerade den Vorteil einer Reduzierung bzw. Einstellung der Anfangsreibung durch die Strukturierung der Oberfläche eines Kunststoffbauteils in Kombination mit einem günstigen Reibendwert. Die Anfangsreibung kann näherungsweise der Reibung im eingefahrenen Zustand entsprechen oder auch deutlich niedriger durch geeignete Strukturierung und Ausbildung der Strukturen an der Oberfläche des Kunststoffbauteils eingestellt werden.

Das thermoplastische Kunststoffbauteil kann dabei gemäß einer Ausführungsform derart gestaltet sein, dass bei den in der Oberfläche ausgebildeten Strukturtypen der Abstand, die Breite oder die Höhe innerhalb der Struktur konstant sind. Ebenso kann es sich bei der Oberflächenstruktur um Vertiefungen handeln, so dass der Abstand, die Breite oder die Tiefe der Strukturtypen innerhalb der Struktur konstant sind.

Gemäß einer weiteren Ausführungsform kann die Oberflächenstruktur des thermoplastischen Kunststoffbauteils derart gestaltet sein, dass der Abstand, die Breite oder die Höhe, bei erhabenen Strukturtypen, innerhalb der Struktur variieren. In analoger Weise gilt dies auch für Oberflächenstrukturen, die Strukturtypen aufweisen, die Vertiefungen ausgebildet haben. Hier variiert auch der Abstand, die Breite oder die Tiefe der Strukturtypen innerhalb der Struktur.

Wie bereits oben erwähnt, können die Strukturen an der Oberfläche des thermoplastischen Kunststoffbauteils erhaben oder vertieft ausgeprägt sein. Gemäß einer möglichen Ausführungsform der Erfindung ist der Strukturtyp aus einer ununterbrochenen Linie oder aus mehreren in der geraden Linie aneinandergereihten einzelnen Linien gebildet oder besteht aus mehreren in der geraden Linie aneinandergereihten Punkten. Auch können Mischformen der Strukturtypen an der Oberfläche des thermoplastischen Kunststoffbauteils ausgebildet werden. Einzige Bedingung ist, dass die unterschiedlichen Strukturtypen immer entlang einer geraden Linie angeordnet sind.

Ebenso ist es denkbar, dass mehrere Linien in einer gewissen homogenen Ordnung auf der Oberfläche eines Kunststoffbauteils angeordnet sind. Eine mögliche weitere Ausführungsform der Erfindung besteht darin, dass der Strukturtyp aus einer Aneinanderreihung von Punkten mit einem gewissen Durchmesser sein kann. Die mehreren Punkte sind in jeweils einer geraden Linie angeordnet. Gemäß einer bevorzugten Ausführungsform können die Punkte derart aneinander gereiht sein, dass sie im Wesentlichen eine Linie aus aneinandergereihten Punkten bilden.

Die Oberflächenstruktur des Kunststoffbauteils kann dabei derart gestaltet sein, dass die Strukturtypen an der Oberfläche des Kunststoffbauteils unter einem Winkel von - 90° bis + 90° in Bezug auf eine Belastungsrichtung des Kunststoffbauteils orientiert sind. Dabei ist zu beachten, dass die Verteilung der Strukturtypen und deren Orientierung an der Oberfläche des Kunststoffbauteils homogen ist. Gemäß einer anderen Ausführungsform ist es ebenfalls vorstellbar, dass die Verteilung der Strukturtypen und deren Orientierung an der Oberfläche des Kunststoffbauteils statistisch ist.

Erfindungsgemäß wird ein Verfahren zum Erzeugen einer Oberflächenstruktur in zumindest einem Teil einer Oberfläche eines thermoplastischen Kunststoffbauteils bei einem Spritzgussprozess offenbart. Bei dem Verfahren wird zunächst mit einem gepulsten Laser das Ausbilden einer im Kunststoffbauteil zu erzeugenden negativen Oberflächenstruktur in einer Oberfläche eines Einsatzes für ein Werkzeug zur Herstellung eines Kunststoffbauteils im Spritzgussprozess durchgeführt. Der Einsatz zur Herstellung eines Kunststoffbauteils findet im Wesentlichen bei einem Spritzgusswerkzeug Anwendung, so dass das Kunststoffbauteil mittels Abformung erzeugt wird. Durch die Abformung des Kunststoffbauteils mit dem Einsatz bildet sich dabei die Oberflächenstruktur an der Oberfläche des Kunststoffbauteils aus. Die Oberfläche des Kunststoffbauteils trägt mehrere jeweils in einer geraden Linie angeordnete Strukturtypen. Der durch den Spritzgussprozess ausgebildete Strukturtyp kann aus einer ununterbrochenen Linie, mehreren einzelnen, aneinandergereihten Linien oder einer Aneinanderreihung von Punkten gebildet sein. Ebenso wäre es denkbar, dass mit dem gepulsten Laser eine Oberflächenstruktur direkt in zumindest einem Teil der Oberfläche des Kunststoffbauteils ausgebildet werden kann. Unabhängig davon, ob zunächst ein Einsatz mit einem gepulsten Laser strukturiert wird oder ob das Kunststoffbauteil direkt mit dem gepulsten Laser strukturiert wird, erhält man eine strukturierte Oberfläche, bei der ein Abstand zwischen zwei benachbarten, geraden Linien von Strukturtypen in zumindest einem Teil der Oberfläche des spritzgegossenen Kunststoffbauteils ausgebildet wird, der im Bereich von 10 µm bis 1 mm liegt. Analog erhält man Strukturtypen mit einer Breite in zumindest einem Teil der Oberfläche des spritzgegossenen Kunststoffbauteils, bei dem die Breite im Bereich von 10 µm bis 1mm liegt. Gemäß einer bevorzugten Ausführungsform liegt die Breite der Strukturtypen in zumindest einem Teil der Oberfläche des Kunststoffbauteils im Bereich von 10 µm bis 100 µm. Ebenso kann man je nach Strukturierung des Einsatzes ununterbrochene Linien, eine in einer geraden Linie verlaufende Aneinanderreihung von einzelnen Linien oder eine in einer geraden Linie verlaufende Aneinanderreihung von Punkten erhalten, die eine Höhe oder eine Tiefe in zumindest einem Teil der Oberfläche des spritzgegossenen Kunststoffbauteils aufweisen und die somit ausgebildete Höhe oder Tiefe im Bereich von 1 µm bis 100 µm liegt.

Gemäß einer Ausführungsform der Erfindung wird der gepulste Laser beim Ausbilden der negativen Oberflächenstruktur in dem Werkzeug zur Herstellung des Kunststoffbauteils im Spritzgussprozess in zumindest einem Teil der Oberfläche des Kunststoffbauteils derart gesteuert, dass der Abstand, die Breite oder die Höhe und der Abstand, die Breite oder die Tiefe der Strukturtypen innerhalb der Struktur an der Oberfläche des Kunststoffbauteils konstant sind.

Gemäß einer weiteren möglichen Ausführungsform der Erfindung wird der gepulste Laser beim Ausbilden der Linien oder die Aneinanderreihung von Punkten in zumindest einem Teil der Oberfläche des Kunststoffbauteils derart gesteuert, dass der Abstand, die Breite oder die Höhe und der Abstand, die Breite oder die Tiefe der Strukturtypen der Struktur an der Oberfläche des Kunststoffbauteils konstant sind.

Ebenso kann gemäß einer Ausführungsform des Verfahrens der gepulste Laser beim Ausbilden der negativen Oberflächenstruktur in dem Einsatz für das Werkzeug zur Herstellung des Kunststoffbauteils im Spritzgussprozess in zumindest einem Teil der Oberfläche des Kunststoffbauteils derart gesteuert werden, dass der Abstand, die Breite oder die Höhe oder der Abstand, die Breite oder die Tiefe der Strukturtypen innerhalb der Struktur an der Oberfläche des Kunststoffbauteils variieren.

Ebenso kann gemäß einer möglichen Ausführungsform des Verfahrens der gepulste Laser beim Ausbilden der Oberflächenstruktur in zumindest einem Teil der Oberfläche des Kunststoffbauteils derart gesteuert werden, dass der Abstand, die Breite oder die Höhe oder der Abstand sowie die Breite oder die Tiefe der Strukturtypen an der Oberfläche des Kunststoffbauteils variieren.

Gemäß einer weiteren Ausführungsform der Erfindung kann der gepulste Laser beim Ausbilden der negativen Oberflächenstruktur für die Strukturtypen in zumindest einem Teil der Oberfläche des Kunststoffbauteils derart gesteuert werden, dass die Strukturtypen an der Oberfläche des Kunststoffbauteils erhaben oder vertieft ausgeprägt sind.

Gemäß einer weiteren Ausführungsform der Erfindung kann der gepulste Laser beim Ausbilden der negativen Oberflächenstrukturen oder beim Ausbilden der Oberflächenstruktur in zumindest einem Teil der Oberfläche des spritzgegossenen Kunststoffbauteils derart gesteuert werden, dass die Strukturtypen (ununterbrochene Linien oder die in einer Linie aneinandergereihten Linien oder die in einer Linie aneinandergereihten Punkte) an der Oberfläche des spritzgegossenen Kunststoffbauteils unter einem Winkel von - 90 ° bis + 90 ° in Bezug auf eine Belastungsrichtung des Kunststoffbauteils orientiert sind.

Bei dem erfindungsgemäßen Verfahren ist es von Vorteil, wenn die entlang von geraden Linien angeordneten Strukturtypen (ununterbrochene Linien oder die in einer Linie aneinandergereihten Linien oder die in einer Linie aneinandergereihten Punkte) eine Ausrichtung aufweisen, die entlang einer Fließrichtung des zu füllenden thermoplastischen Kunststoffes beim Spritzgussverfahren ist. Dies hat den Vorteil, dass die sehr feinen Linien oder Punkte der Aneinanderreihung von Punkten, wie oben beschrieben, beim Spritzgussprozess gefüllt werden. Die Ausbildung von Schatten und Lufteinschlüssen wird vermieden.

Der Vorteil der Strukturtypen (ununterbrochene Linien oder die in einer Linie aneinandergereihten Linien oder die in einer Linie aneinandergereihten Punkte), die, wie bereits erwähnt, im Mikrometerbereich durch Lasertechnik in Werkzeugstahl eingebracht und anschließend abgeformt werden, ist die reduzierte Anfangsreibung. Die entstehenden bzw. abgeformten Kunststoffbauteile zeigen eine definierte Oberflächenstruktur und ein abweichendes Reibverhalten gegen eine Referenzprobe (Reibpartner). Adhäsive Reibungsanteile und damit vor allem die Haft- und Anfangsreibung eines tribologischen Systems kann herabgesetzt werden. Eine Balancierung zwischen Anfangsreibung und Reibung im eingefahrenen Zustand (z. B. bei ca. 50 Lastzyklen) kann durch die Gestaltung der Oberflächenstrukturierung erreicht werden.

Obwohl sich die nachfolgende Beschreibung der möglichen Ausführungsformen der Strukturtypen auf Linien oder Punkte beschränkt, soll dies nicht als eine Beschränkung der Erfindung auf diese Strukturtypen aufgefasst werden. Eine Bedingung ist, dass die Strukturen derart gestaltet sind, dass sie sich mit einem Spritzgussverfahren abformen lassen. Bei punktförmigen Strukturen ist zu beachten, dass sich diese in Abhängigkeit von deren Größe oft schlecht beim Spritzgussverfahren füllen lassen (Lufteinschluss). Bei Linienstrukturen erscheint eine Ausrichtung entlang der Fließrichtung des füllenden Kunststoffes vorteilhaft, um Lufteinschlüsse zu vermeiden. Im Allgemeinen können all diejenigen Strukturtypen verwendet werden, die für eine qualitativ hochwertige Abformung beim Spritzgussverfahren geeignet sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Weitere Vorteile und vorteilhafte Ausgestaltungen der Erfindung sind Gegenstand der nachfolgenden Figuren, sowie deren Beschreibungsteile.

Es zeigen im Einzelnen:
- **Figur 1**: eine schematische Darstellung einer Anordnung, mit der mittels eines gepulsten Lasers Strukturen in einem Einsatz für ein Spritzgusswerkzeug geschrieben werden;
- **Figur 2A** bis **2F**: mehrere Varianten der Orientierung der Strukturen an der Oberfläche eines Kunststoffbauteils in Bezug auf eine Belastungsrichtung mit einem weiteren Reibpartner;
- **Figur 3A** bis **3B**: mögliche Kombinationen und Anordnungen von zwei unterschiedlichen Strukturtypen an der Oberfläche eines Kunststoffbauteils;
- **Figur 4A** bis **4B**: die Ausbildung der Linienstrukturen an der Oberfläche eines Kunststoffbauteils, wobei die Linienstrukturen Erhebungen oder Vertiefungen sein können;
- **Figur 5A** bis **5B**: die Ausbildung eines weiteren Strukturtyps, der als Punkt ausgebildet ist und ebenfalls an der Oberfläche eines Kunststoffbauteils in Form von einer Erhebung oder einer Vertiefung ausgebildet sein kann;
- **Figur 6**: eine schematische Darstellung des Werkzeugs im Schnitt, bei dem der erfindungsgemäß ausgebildete Einsatz eingesetzt ist;
- **Figur 7**: eine schematische Zuordnung des erfindungsgemäß strukturierten Kunststoffbauteils zu einem Reibpartner;
- **Figur 8A** bis **8B**: die Situation bei einem Kunststoffbauteil, das mit einem Additiv versehen ist, im Anfangszustand und im eingefahrenen Zustand;
- **Figur 9A** bis **9B**: die Situation eines Kunststoffbauteils, das ebenfalls mit einem Additiv versehen ist und an der Oberfläche eine Oberflächenstruktur ausgebildet hat und die Situation hierzu, ebenfalls im eingefahrenen Zustand; und
- **Figur 10**: eine Funktion der Reibkraft in Abhängigkeit der Zahl der Lastzyklen für ein Kunststoffbauteil mit und ohne Oberflächenstrukturierung.

Für gleiche oder gleich wirkende Elemente der Erfindung werden identische Bezugszeichen verwendet. Die dargestellten Ausführungsbeispiele der möglichen Ausbildungen der Oberflächenstruktur dienen lediglich zur Beschreibung der verschiedenen Ausgestaltungsmöglichkeiten und sind nicht als Beschränkung der Erfindung zu betrachten.

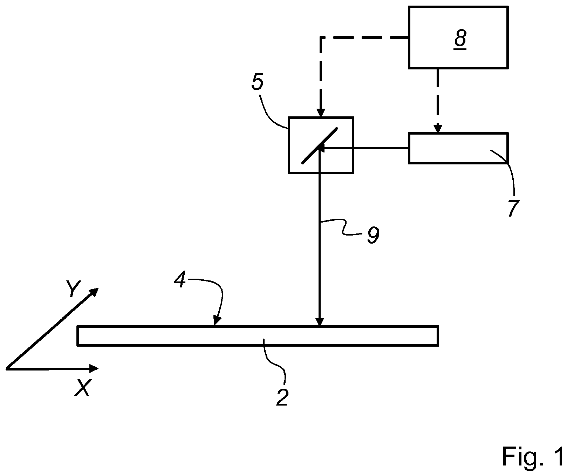

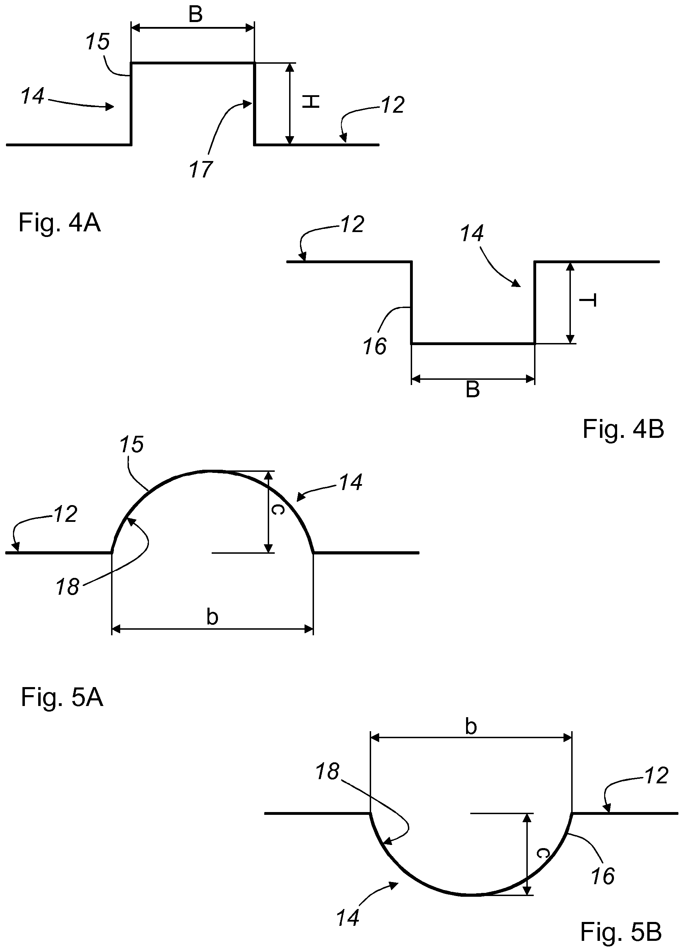

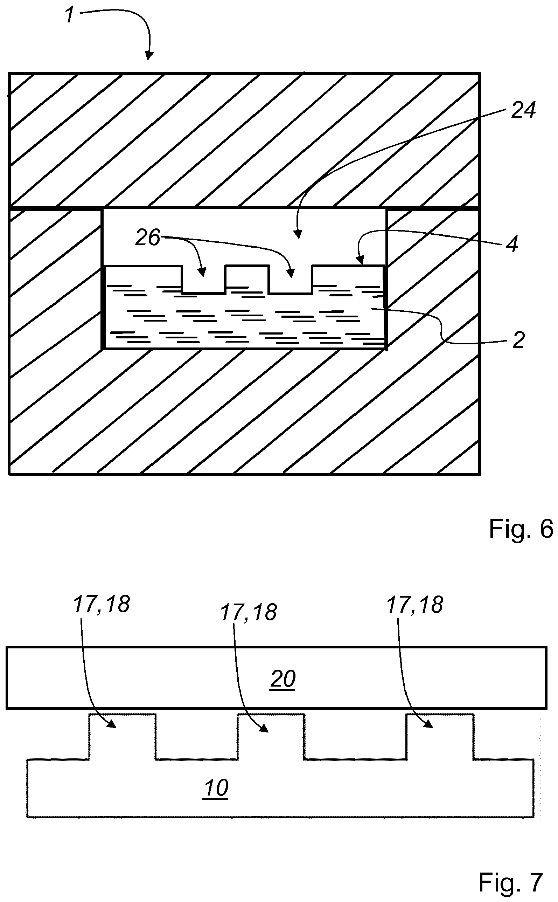

**Figur 1** zeigt eine schematische Ansicht einer Anordnung, mit der Mikrostrukturierungen in der Oberfläche 4 eines Einsatzes 2 für ein Spritzgusswerkzeug (hier nicht dargestellt) zur Herstellung eines Kunststoffbauteils 10 (siehe Fig. 7) eingebracht werden können. Für die Strukturierung der Oberfläche 4 des Einsatzes 2 wird ein gepulster Laser 7 verwendet. Bevorzugt liegt dabei die Pulsdauer des Lasers 7 zwischen 10 und 20 Pikosekunden, und der auf die Oberfläche 4 treffende gepulste Laserstrahl 9 hat dabei eine hohe Lichtintensität. Um die Vertiefungen (hier nicht dargestellt) in der Oberfläche 4 des Einsatzes 2 zu schreiben (bei dem abgeformten Kunststoffbauteil 10 werden folglich mikrostrukturierte Erhebungen 15 ausgebildet; siehe Figuren 4A und 5A) oder um Material von der Oberfläche 4 des Einsatzes 2 abzutragen (bei dem abgeformten Kunststoffbauteil 10 werden folglich mikrostrukturierte Vertiefungen 16 ausgebildet; siehe Figuren 4B und 5B), muss eine Relativbewegung zwischen der Oberfläche 4 des Einsatzes 2 und des auf die Oberfläche 4 des Einsatzes 2 treffenden, gepulsten Laserstrahls 9 bestehen. Eine Möglichkeit, um dies zu erreichen, ist eine Scanneinrichtung 5, mit der der gepulste Laserstrahl 9 in X-Richtung X und in Y-Richtung Y auf der Oberfläche 4 des Einsatzes 2 abgelenkt wird, um somit die Vertiefungen (hier nicht dargestellt) zu schreiben. Wie der gepulste Laserstrahl 9 auf der Oberfläche 4 des Einsatzes 2 abgelenkt werden soll, wird durch eine Steuerung 8 geregelt. Ebenso ist es möglich, dass mit dem gepulsten Laser 7 ebenfalls eine direkte Strukturierung eines Kunststoffbauteils 10 durchgeführt werden kann. Hier wird mit dem Laser 7 entsprechend Material von der Oberfläche des Kunststoffbauteils abgetragen, so dass sich die für die Reibungsreduzierung erforderlichen Strukturen 13 auf der Oberfläche 4 des Kunststoffbauteils 10 ausbilden können.

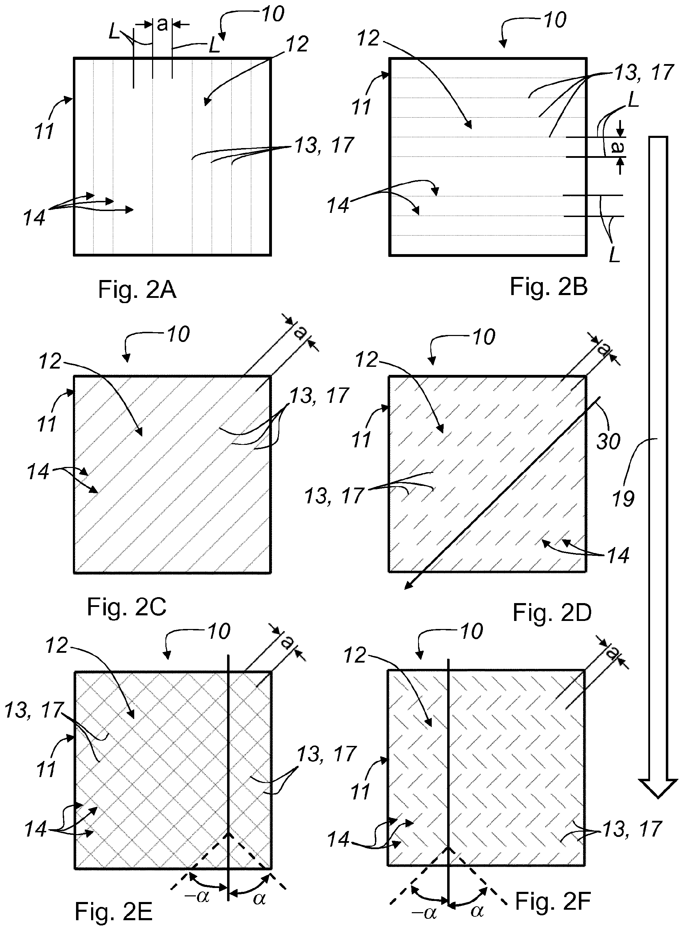

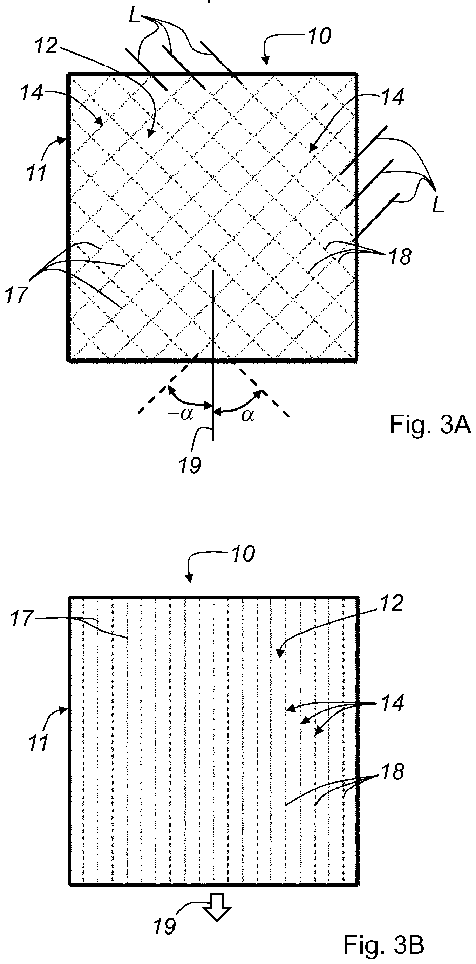

Die **Figuren 2A** bis **2F** zeigen unterschiedliche Varianten der Anordnung der Strukturen 13 auf der Oberfläche 12 des thermoplastischen Kunststoffbauteils 10. Die Strukturen 13 auf der Oberfläche 12 des thermoplastischen Kunststoffbauteils 10 können durchgehende Linien 17 und/oder eine Aneinanderreihung von separaten Linien 17 und/oder eine Aneinanderreihung von separaten Punkten 18 (siehe Fig. 3A) sein. Als Punkt 18 im Sinne der Erfindung ist ein geometrisches Gebilde zu verstehen, das eine im Wesentlichen kreisförmige Gestalt hat und nicht allzu groß ist. Die Strukturen 13 auf der Oberfläche 12 des thermoplastischen Kunststoffbauteils 10 sind im Wesentlichen entlang einer geraden Linie L angeordnet. Die geraden Linien L untereinander sind mit einem Abstand a zueinander beabstandet. Ebenfalls wäre es denkbar, dass der Abstand a zwischen den geraden Linien L der einzelnen Strukturen 13 ebenfalls variiert werden kann. Der Abstand a ist somit über den zumindest strukturierten Teil der Oberfläche 12 des Kunststoffbauteils 10 nicht konstant. Durch die Variation des Abstands a zwischen den geraden Linien L der Strukturen 13 kann somit auch der Anfangsreibwert gezielt eingestellt werden.

In den **Figuren 2A** bis **2F** sind unterschiedliche Orientierungen der Strukturen 13 (eines einzigen Strukturtyps) in Bezug auf eine Belastungsrichtung 19 mit einem weiteren Reibpartner (hier nicht dargestellt) gezeigt.

Der in den **Figuren 2A** bis **2F** verwendete Strukturtyp 14 ist hier als Linie 17 ausgebildet. Bei der in Figur 2A dargestellten Ausführungsform der Oberflächenstruktur 11 erstrecken sich die Linien 17 in Richtung der Belastungsrichtung 19. Die in Figur 2B gezeigte Ausführungsform der Oberflächenstruktur 11 ist derart gestaltet, dass die Linien 17 der Oberflächenstruktur 11 sich senkrecht zur Belastungsrichtung 19 erstrecken. Bei der in Figur 2C gezeigten Ausführungsform verlaufen die Linien 17 der Oberflächenstruktur 11 unter einem Winkel zur Belastungsrichtung 19. Bei der in Figur 2D gezeigten Ausführungsform ist die Oberflächenstruktur 11 derart gestaltet, dass einzelne Linien 17 der Oberflächenstruktur 11 entlang einer Vorzugsrichtung 30, die der geraden Linie L entspricht, ausgerichtet sind. Die einzelnen Linien 17 sind dabei entlang der geraden Linie L voneinander beabstandet. Gemäß einer weiteren Ausführungsform, wie in Figur 2E dargestellt, sind die Linien 17 der Oberflächenstruktur 11 unter einem Winkel α und -α in Bezug auf die Belastungsrichtung 19 geneigt. Die einzelnen Linien 17 der Oberflächenstruktur 11 schneiden sich dabei. Bei der in Figur 2F dargestellten Ausführungsform ist die Oberflächenstruktur 11 des Kunststoffbauteils 10 derart ausgebildet, dass die einzelnen Linien 17 analog zu der in Figur 2E gezeigten Darstellung ebenfalls unter einem Winkel α und -α in Bezug auf die Belastungsrichtung 19 geneigt sind. Die einzelnen Linien 17 der hier dargestellten Oberflächenstruktur 11 sind entlang der geraden Linie voneinander beabstandet.

In den **Figuren 3A** und **3B** sind Kombinationsstrukturen dargestellt, was bedeutet, dass die Oberflächenstrukturen 11 des thermoplastischen Kunststoffbauteils 10 aus einer Kombination von mindestens zwei unterschiedlichen Strukturtypen 14 aufgebaut sind. Bei der in Figur 3A gezeigten Darstellung ist ein Strukturtyp 14 durch Linien 17 gebildet. Der andere Strukturtyp 14 besteht aus einer Vielzahl von Punkten 18, die linear entlang der geraden Linie L aneinandergereiht angeordnet sind. Die Strukturtypen 14 sind dabei derart auf der Oberfläche 12 des Kunststoffbauteils 10 angeordnet, dass sie sich berühren. Die Linien 17 sind unter einem Winkel -α zur Belastungsrichtung 19 und die aneinandergereihten Punkte 18 sind unter einem Winkel α zur Belastungsrichtung 19 angeordnet. Bei der in Figur 3B gezeigten Darstellung sind ebenfalls zwei unterschiedliche Strukturtypen 14 auf der Oberfläche 12 des Kunststoffbauteils 10 ausgebildet. Wie bereits in der Beschreibung zu Figur 3A erwähnt, ist ein Strukturtyp 14 in Form von Linien 17 ausgebildet, der andere Strukturtyp 14 ist in Form von einer Aneinanderreihung von Punkten 18 ausgebildet. Beide Strukturtypen 14 sind bei der in Figur 3B gezeigten Darstellung parallel zueinander angeordnet und in Richtung der Belastungsrichtung 19 ausgerichtet.

Die in **Figur 3A** gezeigte Ausführungsform stellt eine vorteilhafte Kombination der unterschiedlichen Strukturtypen 14 dar, da sich die Strukturtypen 14 aus den Linien 17 und der Aneinanderreihung der Punkte 18 berühren und unter einem Winkel von jeweils α oder -α in Bezug auf die Belastungsrichtung 19 geneigt sind. Dies führt im Vergleich zu der in Figur 3B gezeigten Darstellung zu keinen Verhakungen bei der Belastung des Kunststoffbauteils 10 in Bezug auf einen Reibpartner (hier nicht dargestellt) in der ausgezeichneten Belastungsrichtung 19. Obwohl in den Figuren 3A und 3B lediglich zwei mögliche Ausführungsformen der Kombination von zwei unterschiedlichen Strukturtypen 14 dargestellt sind, soll dies nicht als eine Beschränkung der Erfindung aufgefasst werden. Es sind eine Vielzahl von Ausrichtungen und Orientierungen der unterschiedlichen Strukturtypen 14 in Bezug auf die Belastungsrichtung 19 vorstellbar. Gerade durch die unterschiedliche Ausgestaltung der Oberflächenstrukturen 11 an der Oberfläche 12 eines thermoplastischen Kunststoffbauteils 10 ist es möglich, die optimale Anpassung des Kunststoffbauteils 10 in Bezug auf die gewünschte Anfangsreibung (bei den ersten Lastzyklen) zu erzielen.

Die **Figuren 4A** und **4B** zeigen die Ausbildung der Strukturtypen 14, die als Linien 17 an der Oberfläche 12 des Kunststoffbauteils 10 ausgebildet sind. In Figur 4A ist die Linie 17 (bzw. Teil einer Linie) eine Erhebung 15, die eine Breite B und eine Höhe H aufweist. Die Breite der Linie 17 kann im Bereich von 10 µm bis 100 µm liegen. Die Höhe der Linie 17 kann im Bereich von 1 µm bis 100 µm liegen. Bei der in Figur 4B gezeigten Ausführungsform ist die Linie 17 als eine Vertiefung 16 von der Oberfläche 12 des Kunststoffbauteils 10 ausgehend ausgebildet. Die Vertiefung 16 hat dabei eine Tiefe T, die im Bereich von 1 µm bis 100 µm liegt. Die Breite B der Vertiefung 16 liegt dabei im Bereich von 10 µm bis 100 µm.

**Figur 5A** und **Figur 5B** zeigen den Strukturtyp 14, der als Punkt 18 in Form einer Erhebung 15 oder einer Vertiefung 16 in Bezug auf die Oberfläche 12 des Kunststoffbauteils 10 ausgebildet ist. Wie bereits in der Beschreibung zu den Figuren 3A und 3B dargestellt, können die einzelnen Punkte 18 in einer Linie aneinander aufgereiht angeordnet sein.

Die Punkte 18 sind im Wesentlichen kreisförmig ausgebildet und besitzen eine Breite B, die im Bereich zwischen 10 µm und 100 µm liegt. Ist der Punkt 18 als Erhebung 15 ausgebildet, besitzt er eine Höhe H, die im Bereich zwischen 1 µm bis 100 µm liegt. Für den Fall, dass der Punkt 18 als Vertiefung 16 ausgebildet ist, besitzt er eine Tiefe T, die analog im Bereich zwischen 1 µm und 100 µm liegt. Die Strukturtypen 14, die z. B. eine Linie 17 oder eine Aneinanderreihung von Punkten 18 ausbilden können, die sich über einen gewissen Teil der Oberfläche 12 des Kunststoffbauteils 10 erstrecken können, können gemäß der Erfindung derart gestaltet sein, dass innerhalb der Struktur 13 die Parameter, wie z. B. Abstand a der Strukturen 13 untereinander, die Breite B, die Höhe H oder die Tiefe T entlang der Struktur, variieren können. Die Variation dieser Parameter bewegt sich innerhalb der oben beschriebenen Wertebereiche.

Die Strukturen 13, die in der Oberfläche 12 eines Kunststoffbauteils 10 ausgebildet sind, resultieren daraus, dass bei einem Einsatz 2 (siehe Fig. 6) für ein Spritzgusswerkzeug 1 (siehe Fig. 6) zur Herstellung eines Kunststoffbauteils 10 diese Strukturen 13 in einer negativen Form in den Einsatz 2 eingebracht werden. Das Kunststoffbauteil 10 kann dann zusammen mit der Oberflächenstruktur 11 in einem Spritzgussverfahren abgeformt werden. Ggf. kann das Spritzgussverfahren mit einem variothermischen Verfahren unterstützt werden. Die einzelnen Strukturen 13 können in zueinander sinnvollen Kombinationen verwendet werden. Lediglich ist dabei zu beachten, dass ein Verhaken der beiden Strukturen 13 bei der Bewegung in Bezug auf die Belastungsrichtung 19 vermieden werden soll.

**Figur 6** zeigt eine schematische Ansicht des Spritzgusswerkzeugs 1, mit dem ein Spritzgussbauteil hergestellt werden kann. In dem Spritzgusswerkzeug 1 ist der Einsatz 2 eingesetzt. Zwischen dem Einsatz 2 und dem Spritzgusswerkzeug 1 ist ein Freiraum 24 ausgebildet, der beim Spritzgussvorgang mit dem für den Spritzgussvorgang verwendeten Kunststoff (Thermoplasten) gefüllt werden kann. Die mit dem gepulsten Laser 7 in der Oberfläche 4 des Einsatzes 2 für das Spritzgusswerkzeug 1 erzeugte Strukturierung sind Vertiefungen 26 (Linie, Aneinanderreihung von Linien, oder Aneinanderreihung von Punkten) die sich abwechseln. Die Vertiefungen 26 in der Oberfläche 4 des Einsatzes 2 stellen somit die Negativform des letztendlich erzeugten Kunststoffbauteils (hier nicht dargestellt) dar.

**Figur 7** zeigt eine schematische Darstellung des Zusammenwirkens des erfindungsgemäß hergestellten Kunststoffbauteils 10 mit einem Reibpartner 20. Das mit Hilfe des Einsatzes 2 spritzgegossene Kunststoffbauteil 10 hat eine Linie 17, eine Aneinanderreihung von Linien 17, und/oder eine Aneinanderreihung von Punkten 18 ausgebildet, die mit dem Reibpartner 20 in Kontakt sind. Die Linien 17, die Aneinanderreihung von Linien 17, und/oder eine Aneinanderreihung von Punkten 18 reduzieren die Anfangsreibung (Haftreibung) zwischen dem Kunststoffbauteil 10 und dem Reibpartner 20.

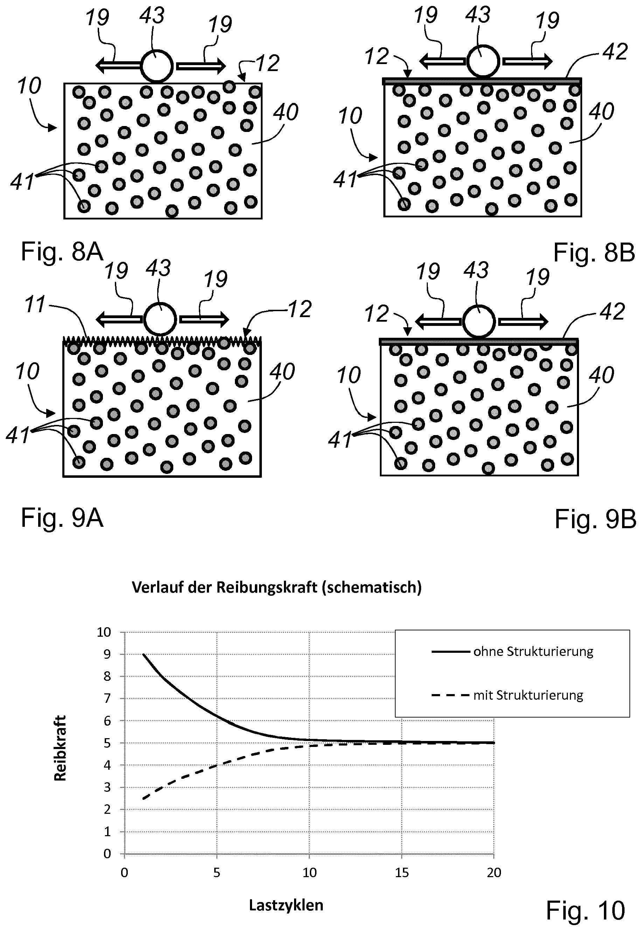

Die **Figuren 8A** und **8B** zeigen die Situation eines herkömmlichen Kunststoffbauteils 10 in einer Ausgangssituation und in eingefahrenem Zustand (nach einer bestimmten Anzahl von Lastzyklen). Das Kunststoffbauteil 10 ist zur Verminderung der Reibung mit einem Reibpartner 20, der entlang einer Belastungsrichtung 19 über die Oberfläche 12 des Kunststoffbauteils 10 geführt wird, mit einem Gleitadditiv 41 versehen. Das Gleitadditiv 41 ist dabei im Wesentlichen homogen im Grundmaterial 40 des Kunststoffbauteils 10 verteilt. Bei der in Figur 6A dargestellten Situation weist die Anfangsreibung einen erhöhten Wert auf, da das Gleitadditiv 41 noch nicht an der Oberfläche 12 des Kunststoffbauteils 10 freigesetzt ist. Bei der in Figur 6B dargestellten Situation ist nach einer Vielzahl von Lastzyklen (eingefahrener Zustand) ein Schmierfilm 42 an der Oberfläche 12 des Kunststoffbauteils 10 ausgebildet. Durch diese Ausbildung des Schmierfilms 42 wird somit eine Absenkung der Reibung erreicht, die sich auf einen bestimmten konstanten Wert (siehe Fig. 8) einpendelt.

Bei der in den **Figuren 9A** und **9B** gezeigten Ausgestaltung ist das Kunststoffbauteil 10 aus dem Grundmaterial 40 und dem zugesetzten Gleitadditiv 41 ausgebildet. Gemäß der Erfindung ist in der in Figur 7A gezeigten Darstellung an der Oberfläche 12 des Kunststoffbauteils 10 die Oberflächenstruktur 11 ausgebildet, die für eine niedrige adhäsive Anfangsreibung zwischen dem Kunststoffbauteil 10 und dem Reibpartner 20 entlang der Belastungsrichtung 19 sorgt. Wie in der Figur 7B zu erkennen ist, ist nach einer bestimmten Anzahl von Lastzyklen die Oberflächenstruktur 11 zerrieben und ein Schmierfilm 42 hat sich an der Oberfläche 12 des Kunststoffbauteils 10 ausgebildet. Durch diesem Schmierfilm 42 stellt sich nun ebenfalls ein Wert der Reibung ein, der letztendlich einen Wert erreicht, der dem Reichwert eines Kunststoffbauteils 10 entspricht, das analog zu dem Ausführungsbeispiel der Figuren 6A und 6B, keine Oberflächenstruktur 11, zumindest vor Beginn der Lastzyklen, ausgebildet hat.

In **Figur 10** ist der Verlauf der Reibkraft in Abhängigkeit von den Lastzyklen zwischen dem Reibpartner 20 und dem Kunststoffbauteil 10 dargestellt. Die gestrichelte Linie 51 gibt die Reibkraft in Abhängigkeit der Anzahl der Lastzyklen wieder, die bei einem Kunststoffbauteil 10 auftritt, das eine Oberflächenstruktur 11 gemäß der Erfindung ausgebildet hat. Die durchgezogene Linie 52 gibt dabei den Verlauf der Reibkraft in Abhängigkeit von der Anzahl der Lastzyklen eines herkömmlichen Kunststoffbauteils 10 (ohne die erfindungsgemäße Oberflächenstruktur 11) wieder. Aus der Figur 10 ist deutlich zu erkennen, dass die Anfangsreibung bei einem Kunststoffbauteil 10 mit einer erfindungsgemäßen Oberflächenstruktur 11 reduziert ist. Nach einer bestimmten Anzahl von Lastzyklen gleicht sich die Reibkraft an die Reibkraft des herkömmlichen Kunststoffbauteils 10 an. In beiden Fällen bildet sich nach einer bestimmten Anzahl von Lastzyklen ein Schmierfilm 42 (siehe Fig. 6B und 7B) an der Oberfläche 12 des Kunststoffbauteils 10 aus, so dass in beiden Fällen (herkömmliches Kunststoffbauteil 10 und Kunststoffbauteil 10 mit einer Oberflächenstruktur 11 an der Oberfläche 12) dadurch gleiche Reibverhältnisse nach der bestimmten Anzahl von Lastzügen erreicht werden.

Das Kunststoffbauteil 10 mit der Oberflächenstruktur 11 besteht aus einem Thermoplasten. Der Reibpartner 20 kann ebenfalls ein Thermoplast sein. Ebenfalls ist auch ein anderes Material, wie z. B. Glas oder ein metallisches Bauteil denkbar. In der Regel sind das Kunststoffbauteil 10 und der Reibpartner 20 aus einem Thermoplasten. Die Materialien des Kunststoffbauteils 10 bzw. des Reibpartners 20 können gleich oder verschieden sein. Im Normalfall sind zwei unterschiedliche Materialien vorgesehen, da gleiche Materialien für das Kunststoffbauteil 10 und den Reibpartner 20 zueinander eine erhöhte Reibung besitzen.

Gerade in der Praxis können zwei Fälle der Belastung zwischen dem Kunststoffbauteil 10 und dem Reibpartner 20 auftreten. So kann es zu wenigen oder nur einem Lastzyklus zwischen dem Kunststoffbauteil 10 und dem Reibpartner 20 kommen. Dies ist z. B. beim Abziehen einer Kappe bei einem Einmalprodukt der Fall. Wie aus der Darstellung der Figur 8 zu erkennen ist, kann hier die Oberflächenstruktur 11 die Bedienkraft absenken und ggf. ein Additiv vermeiden. Eine Abnutzung der Struktur 13 auf der Oberfläche 12 des Kunststoffbauteils stört dabei nicht.

Die häufigere Anwendung ist jedoch, dass zwischen dem Kunststoffbauteil 10 und dem Reibpartner 20 viele Lastzyklen ausgeführt werden. Dies ist z. B. bei Stechhilfen oder Inhalatoren der Fall. Bei der ersten Anwendung zeigen diese Produkte häufig eine etwas schwergängigere Betätigung. Die erfindungsgemäße Strukturierung kann dieser Schwergängigkeit entgegenwirken und eine gleichmäßigere Bedienkraft über alle Lastzyklen erreichen.

Die Erfindung wurde in Bezug auf bevorzugte Ausführungsformen beschrieben. Es ist für einen Fachmann jedoch selbstverständlich, dass Abwandlungen und Änderungen gemacht werden können, ohne dabei den Schutzbereich der nachstehenden Ansprüche zu verlassen.

### Bezugszeichenliste

- 1: Spritzgusswerkzeug
- 2: Einsatz
- 4: Oberfläche
- 5: Scanneinrichtung
- 7: Laser
- 8: Steuerung
- 9: gepulster Laserstrahl
- 10: Kunststoffbauteil
- 11: Oberflächenstruktur
- 12: Oberfläche
- 13: Strukturen
- 14: Strukturtyp
- 15: Erhebungen
- 16: Vertiefung
- 17: Linie
- 18: Punkt
- 19: Belastungsrichtung
- 20: Reibpartner
- 22: Oberfläche
- 24: Freiraum
- 26: Vertiefung
- 30: Vorzugsrichtung
- 40: Grundmaterial
- 41: Gleitadditiv
- 42: Schmierfilm
- 51: gestrichelte Linie
- 52: durchgezogene Linie
- a: Abstand
- B: Breite
- H: Höhe
- L: gerade Linie
- T: Tiefe
- X: X- Richtung
- Y: Y-Richtung
- α: Winkel
- -α: Winkel

## Patentansprüche

1. Verfahren zum Erzeugen einer Oberflächenstruktur (11) in zumindest einem Teil einer Oberfläche (12) eines thermoplastischen Kunststoffbauteils (10) bei einem Spritzgussprozess
**gekennzeichnet durch die folgenden Schritte:**
Ausbilden mit einem gepulsten Laser (7) einer zu der zu erzeugenden Oberflächenstruktur (11) des Kunststoffbauteils negativen Oberflächenstruktur in einer Oberfläche (4) eines Einsatzes (2) für ein Werkzeug zur Herstellung des Kunststoffbauteils (10) im Spritzgussprozess; und
Abformen des Kunststoffbauteils (10) mit dem Einsatz (2) und dabei Ausbilden der Oberflächenstruktur (11) an der Oberfläche (12) des Kunststoffbauteils (10), die mehrere von jeweils in einer geraden Linie (L) angeordnete Strukturtypen (14) umfasst, derart dass die Strukturtypen (14) bei Verwendung des Kunststoffbauteils (10) verreiben und einen Schmierfilm auf der Oberfläche des Kunststoffbauteils ausbilden; wobei
ein Abstand (a) zwischen zwei benachbarten geraden Linien (L) der Strukturtypen (14) in zumindest einem Teil der Oberfläche (12) des spritzgegossenen Kunststoffbauteils (10) im Bereich von 10µm bis 1mm liegt;
eine Breite (B) der in der geraden Linie (L) angeordneten Strukturtypen (14) in zumindest einem Teil der Oberfläche (12) des spritzgegossenen Kunststoffbauteils (10) im Bereich von 10 µm bis 1mm liegt; und
eine Höhe (H) oder Tiefe (T) der in der geraden Linie (L) angeordneten Strukturtypen (14) in zumindest einem Teil der Oberfläche (12) des spritzgegossenen Kunststoffbauteils (10) im Bereich von 1 µm bis 100 µm liegt.

2. Verfahren nach Anspruch 1, wobei der gepulste Laser (7) beim Ausbilden der negativen Oberflächenstruktur in dem Werkzeug zur Herstellung des Kunststoffbauteils (10) im Spritzgussprozess in zumindest einem Teil der Oberfläche (12) des Kunststoffbauteils (10) derart gesteuert wird, dass der Abstand (a), die Breite (B) oder die Höhe (H) oder der Abstand (a), die Breite (B) oder die Tiefe (T) der in der geraden Linie (L) angeordneten Strukturtypen (14) an der Oberfläche (12) des Kunststoffbauteils (10) konstant sind oder variieren.

3. Verfahren nach einem der vorangehenden Ansprüche, wobei die in der geraden Linie (L) angeordneten Strukturtypen (14) eine Ausrichtung aufweisen, die in einer Fließrichtung des thermoplastischen Kunststoffes beim Spritzgussverfahren ausgerichtet ist.

4. Verfahren nach einem der vorangehenden Ansprüche, wobei der gepulste Laser (7) beim Ausbilden der negativen Oberflächenstruktur im Einsatz (2) derart gesteuert wird, dass der Strukturtyp (14) eine ununterbrochene Linie (17) ist.

5. Verfahren nach einem der vorangehenden Ansprüche 1 bis 3, wobei der gepulste Laser (7) beim Ausbilden der negativen Oberflächenstruktur im Einsatz (2) derart gesteuert wird, dass der Strukturtyp (14) mehrere in der geraden Linie (L) aneinandergereihte Linien (17) ist.

6. Verfahren nach einem der vorangehenden Ansprüche 1 bis 3, wobei der gepulste Laser (7) beim Ausbilden der negativen Oberflächenstruktur im Einsatz (2) derart gesteuert wird, dass der Strukturtyp (14) mehrere in der geraden Linie (L) aneinandergereihte Punkte (18) ist.

7. Verfahren nach einem der vorangehenden Ansprüche, wobei der gepulste Laser (7) beim Ausbilden der negativen Oberflächenstruktur im Einsatz (2) derart gesteuert wird, dass die Strukturtypen (14) an der Oberfläche (12) des Kunststoffbauteils (10) unter einem Winkel (a) von -90° bis +90° in Bezug auf eine Belastungsrichtung (19) des Kunststoffbauteils (10) orientiert sind.

8. Verfahren nach einem der vorangehenden Ansprüche, wobei der Reibpartner (20) ein Thermoplast, Glas oder ein metallisches Bauteil ist.

9. Verfahren nach einem der vorangehenden Ansprüche, wobei der gepulste Laser (7) ein ultrakurz gepulster Laser ist und die physikalische Grenze von ultrakurzen Pulsen aus einer thermischen Diffusionstiefe und einer optischen Eindringtiefe des Lasers (7) resultiert.

10. Verfahren nach Anspruch 9, wobei die Pulsdauer des Lasers (7) zwischen 10 und 20 Pikosekunden beträgt und der auf die Oberfläche (4) treffende gepulste Laserstrahl (9) dabei eine hohe Lichtintensität hat.

## Claims

1. A method for generating a surface structure (11) in at least a part of a surface (12) of a thermoplastic component (10) during an injection molding process, **characterized by the following steps:**
forming, using a pulsed laser (7), a negative surface structure to the surface structure (11) to be generated of the plastic component in a surface (4) of an insert (2) for a tool for producing the plastic component (10) in the injection molding process; and
molding the plastic component (10) using the insert (2) and at the same time forming the surface structure (11) on the surface (12) of the plastic component (10), which structure comprises multiple structure types (14) each arranged in a straight line (L) in such a way that the structure types (14) rub off during use of the plastic component (10) and form a lubricant film on the surface of the plastic component; wherein
a distance (a) between two adjacent straight lines (L) of the structure types (14) is in the range of 10 µm to 1 mm in at least a part of the surface (12) of the injection-molded plastic component (10);
a width (B) of the structure types (14) arranged in the straight line (L) is in the range of 10 µm to 1 mm in at least a part of the surface (12) of the injection-molded plastic component (10); and
a height (H) or depth (T) of the structure types (14) arranged in the straight line (L) is in the range of 1 µm to 100 µm in at least a part of the surface (12) of the injection-molded plastic component (10).

2. The method according to Claim 1, wherein the pulsed laser (7) is controlled during the formation of the negative surface structure in the tool for producing the plastic component (10) in the injection molding process in at least a part of the surface (12) of the plastic component (10) in such a way that the distance (a), the width (B), or the height (H) or the distance (a), the width (B), or the depth (T) of the structure types (14) arranged in the straight line (L) on the surface (12) of the plastic component (10) are constant or vary.

3. The method according to any one of the preceding claims, wherein the structure types (14) arranged in the straight line (L) have an alignment which is aligned in a flow direction of the thermoplastic during the injection molding process.

4. The method according to any one of the preceding claims, wherein the pulsed laser (7) is controlled during the formation of the negative surface structure in the insert (2) in such a way that the structure type (14) is an uninterrupted line (17).

5. The method according to any one of preceding Claims 1 to 3, wherein the pulsed laser (7) is controlled during the formation of the negative surface structure in the insert (2) in such a way that the structure type (14) is multiple lines (17) juxtaposed in the straight line (L).

6. The method according to any one of preceding Claims 1 to 3, wherein the pulsed laser (7) is controlled during the formation of the negative surface structure in the insert (2) in such a way that the structure type (14) is multiple points (18) juxtaposed in the straight line (L).

7. The method according to any one of the preceding claims, wherein the pulsed laser (7) is controlled during the formation of the negative surface structure in the insert (2) in such a way that the structure types (14) on the surface (12) of the plastic component (10) are oriented at an angle (α) of -90° to +90° in relation to a load direction (19) of the plastic component (10).

8. The method according to any one of the preceding claims, wherein the friction partner (20) is a thermoplastic, glass, or a metallic component.

9. The method according to any one of the preceding claims, wherein the pulsed laser (7) is an ultrashort pulsed laser and the physical limit of ultrashort pulses results from a thermal diffusion depth and an optical penetration depth of the laser (7).

10. The method according to Claim 9, wherein the pulse duration of the laser (7) is between 10 and 20 picoseconds, and the pulsed laser beam (9) incident on the surface (4) has a high light intensity in this case.

## Revendications

1. Procédé pour créer une structure de surface (11) dans au moins une partie d'une surface (12) d'une pièce en matière thermoplastique (10) au cours d'un processus de moulage par injection, **caractérisé en ce qu'**il comprend les étapes suivantes :
formation avec un laser à impulsions (7) d'une structure de surface en négatif de la structure de surface (11) à créer sur la pièce en matière plastique dans une surface (4) d'un insert (2) destiné à un outil pour la fabrication de la pièce en matière plastique (10) au cours du processus de moulage par injection et
formage de la pièce en matière plastique (10) avec l'insert (2) et ainsi formation sur la surface (12) de la pièce en matière plastique (10) de la structure de surface (11) comprenant plusieurs types de structures (14) disposés chacun sur une ligne droite (L), de telle sorte que les types de structure (14) soient abrasés lors de l'utilisation de la pièce en matière plastique (10) et forment un film lubrifiant sur la surface de la pièce en matière plastique,
une distance (a) entre des lignes droites (L) voisines des types de structure (14) étant comprise entre 10 µm et 1 mm dans au moins une partie de la surface (12) de la pièce en matière plastique (10) moulée par injection ;
une largeur (B) des types de structure (14) disposés sur la ligne droite (L) étant comprise entre 10 µm et 1 mm dans au moins une partie de la surface (12) de la pièce en matière plastique (10) moulée par injection et
une hauteur (H) ou une profondeur (T) des types de structure (14) disposés sur la ligne droite (L) étant comprise entre 1 µm et 100 µm dans au moins une partie de la surface (12) de la pièce en matière plastique (10) moulée par injection.

2. Procédé selon la revendication 1, dans lequel le laser pulsé (7) est contrôlé, pendant la formation de la structure de surface négative dans l'outil pour la fabrication de la pièce en matière plastique (10) au cours du processus de moulage par injection dans au moins une partie de la surface (12) de la pièce en matière plastique (10), de telle manière que la distance (a), la largeur (B) ou la hauteur (H) ou la distance (a), la largeur (B) ou la profondeur (T) des types de structure (14) disposés sur la ligne droite (L) sur la surface (12) de la pièce en matière plastique (10) soient constantes ou varient.

3. Procédé selon l'une des revendications précédentes, dans lequel les types de structure (14) disposés sur la ligne droite (L) présentent une orientation qui suit une direction d'écoulement de la matière thermoplastique pendant le processus de moulage par injection.

4. Procédé selon l'une des revendications précédentes, dans lequel le laser pulsé (7) est contrôlé pendant la formation de la structure de surface négative dans l'insert (2) de telle manière que le type de structure (14) soit une ligne ininterrompue (17).

5. Procédé selon l'une des revendications 1 à 3, dans lequel le laser pulsé (7) est contrôlé pendant la formation de la structure de surface négative dans l'insert (2) de telle manière que le type de structure (14) soit formé de plusieurs lignes (17) alignées sur la ligne droite (L).

6. Procédé selon l'une des revendications 1 à 3, dans lequel le laser pulsé (7) est contrôlé pendant la formation de la structure de surface négative dans l'insert (2) de telle manière que le type de structure (14) soit formé de plusieurs points (18) alignés sur la ligne droite (L).

7. Procédé selon l'une des revendications précédentes, dans lequel le laser pulsé (7) est contrôlé pendant la formation de la structure de surface négative dans l'insert (2) de telle manière que les types de structure (14) soient orientés sur la surface (12) de la pièce en matière plastique (10) en formant un angle (a) de -90° à +90° par rapport à une direction de la contrainte (19) de la pièce en matière plastique (10).

8. Procédé selon l'une des revendications précédentes, dans lequel l'autre pièce en friction (20) est un thermoplastique, du verre ou une pièce métallique.

9. Procédé selon l'une des revendications précédentes, dans lequel le laser pulsé (7) est un laser à impulsions ultra-courtes et la limite physique des impulsions ultra-courtes résulte d'une profondeur de diffusion thermique et d'une profondeur de pénétration optique du laser (7).

10. Procédé selon la revendication 9, dans lequel la durée d'impulsions du laser (7) est comprise entre 10 et 20 picosecondes et le faisceau laser pulsé (9) atteignant la surface (4) a alors une forte intensité lumineuse.
